# EUROPEAN PATENT SPECIFICATION

(11) **EP 3 802 155 B1**
(45) Date of publication and mention of the grant of the patent: **12.02.2025**
(21) Application number: 18731287.1
(22) Date of filing: 24.05.2018
(51) Int. Cl.: B60C 11/12, B60C 11/03

(54) **HEAVY TRUCK TIRE TREAD AND HEAVY TRUCK TIRE WITH INCLINED AND ANGLED SHOULDER SIPE**
LKW-REIFENPROFIL UND LKW-REIFEN MIT GENEIGTEN UND ABGEWINKELTEN FEINEINSCHNITTEN.
BANDE DE ROULEMENT DE PNEU DE CAMION ET PNEU DE CAMION AVEC BANDE D'ÉPAULEMENT INCLINÉE ET COUDÉE

(43) Date of publication of application: 14.04.2021
(73) Proprietor: COMPAGNIE GENERALE DES ETABLISSEMENTS MICHELIN, 63000 Clermont-Ferrand (FR)
(72) Inventor: ABAROTIN, Victor, Greenville, SC 29605 (US); HICKS, Daniel McEachern, Greenville, SC 29605 (US)
(74) Representative: Casalonga
(86) International application number: PCT/US2018/034358
(87) International publication number: WO 2019/226168

(56) References cited:
- EP-A1- 3 308 982
- WO-A1-2015/176958
- JP-A- 2003 011 619

## Description

### FIELD OF THE INVENTION

This invention relates generally to tire treads and tires. More specifically, this invention relates to tire treads and tires best suitable for the axle(s) of heavy trucks such as the drive axle(s) of tractors used in tractor-semi-trailer combinations or of single unit straight trucks.

### BACKGROUND OF THE INVENTION

Tire treads generally extend about the outer circumference of a tire to operate as the intermediary between the tire and a surface upon which it travels (the operating surface). Contact between the tire tread and the operating surface occurs along a footprint of the tire. Tire treads provide grip to resist tire slip that may result during tire acceleration, braking, and/or cornering. Tire treads may also include tread elements, such as ribs or lugs, and tread features, such as grooves and sipes, each of which may assist in providing target tire performance when a tire is operating under particular conditions. Documents JP 2003 011619 A and WO 2015/176958 A1 each discloses a tire with improved grip.

One problem with treads for drive tires is the compromise between traction, rolling resistance and wear / abnormal wear.

It is known that adding sipes in a tire rib can improve wear rate and traction, but it has not been used successfully in the shoulder ribs of drive tires for the long-haul trucking application because it often triggers abnormal wear. The shoulders of long-haul drive tires are therefore typically designed with solid ribs, with no full-width transverse sipes or full-depth transverse grooves. As a result, the design of long-haul drive tire treads is sacrificing shoulder rib wear rate and traction in order to avoid abnormal wear.

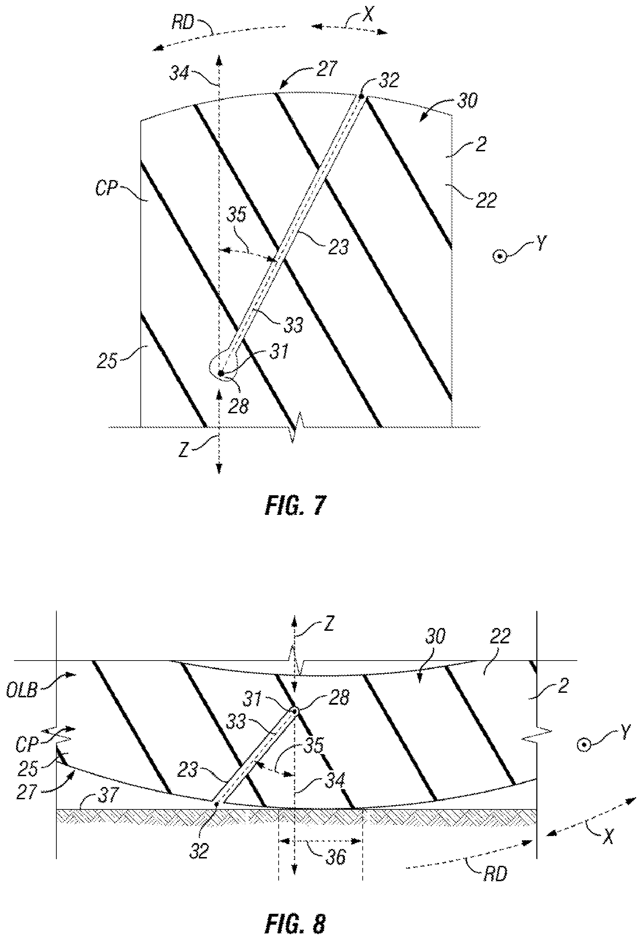

It is also known that the provision of inclined sipes improve the tire's irregular wear performance, but it is not known whether this inclination coupled with other features helps or hurts irregular wear performance. This inclination is in the "negative" direction in that the sipe is angled away from the contact patch, from the bottom to the top of the sipe, as the tire rotates. Fig. 8 shows the rolling direction RD and the orientation of the lateral sipe 23 in relation to the rolling direction RD. However, even the provision of inclined sipes in the shoulder rib has been avoided, because as stated the inclusion of a sipe in the shoulder rib increases the risk of abnormal wear. Further, the combination of sipe inclination with other geometric features of the sipe used in the shoulder rib is not known or understood. As such, there remains room for variation and improvement within the art. These problems are solved by a tire according to claim 1.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a perspective view of a heavy truck tire comprising an embodiment of the disclosed tire tread.
FIG. 2 is a front view of part of the tread of FIG. 1 showing details of its design at a much bigger scale.
FIGS 3 to 6 are front views similar to that of FIG. 2 showing other embodiments of the tread.
FIG. 7 is a cross-sectional view taken along line 7-7 of FIG. 2.
FIG. 8 is a cross-sectional view taken along line 8-8 of FIG. 5 in the contact patch of the tire.
FIG. 9 is a perspective view of a section of a shoulder rib that illustrates both the angle and inclination of the sipe relative to the reference directions of the tread.
FIG. 10 is a cross-sectional view of a portion of the tread 2 that includes a lateral sipe with an undulating shape.
FIG. 11 is a front view of a portion of the tread in which the lateral sipe has a variable sipe inclination angle along its length.

The use of the same or similar reference numerals in the figures denotes the same or similar features.

### DETAILED DESCRIPTION OF PARTICULAR EMBODIMENTS

Reference will now be made in detail to embodiments of the invention, examples of which are illustrated in the drawings. These examples are provided by way of explanation of the invention.

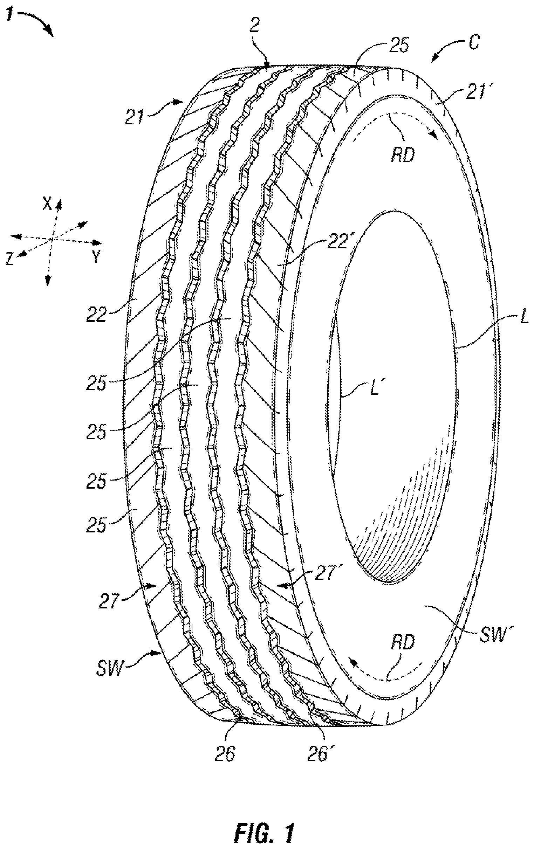

As shown in FIG. 1, a heavy truck tire 1 generally comprises a crown portion C connected by respective sidewalls SW, SW' to beads portions L, L'. The crown portion comprises a tread 2 according to an embodiment of the invention. The design of the tread 2 is substantially symmetric, that is to say that the tread features are arranged substantially symmetrically about the center plane of the tread 2. This tread 2 is said to be of a directional design because it has a different appearance according to which side it is oriented. A directional tire or tread does not only look differently but it also performs differently if used in one rolling direction or the other. This is why directional treads or tires conventionally bear markings that indicate the designed rolling direction. Such markings may take the form of arrows pointing in the designed rolling direction. Also as used in the present application, the notation RD may be used instead of an actual marking on the tread or tire, simply an indication of the rolling direction of the tread or tire. Using the tire for rolling in the opposite direction would be detrimental to its best performance.

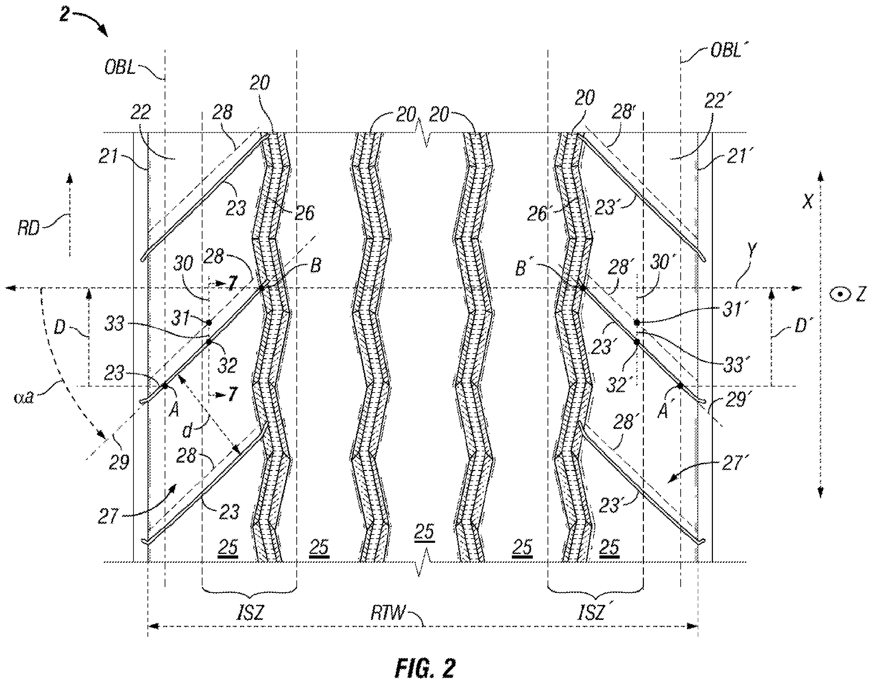

FIG. 2 is a magnified and flattened projection view of a portion of the tread 2 of FIG 1. As shown in FIG. 2, the tread 2 has a longitudinal direction X (also referred to as the circumferential direction of the tire), a lateral direction Y (also referred to as the axial or transverse direction) and a thickness direction Z (also referred to as the tread depth direction, and also referred to as a radial direction). It is to be understood that as used herein, the thickness direction Z and the radial direction Z are interchangeable and mean the same thing, and that that longitudinal direction X and the circumferential direction X are interchangeable and mean the same thing, and that the lateral direction Y and the axial direction Y and the transverse direction Y are interchangeable and mean the same thing.

The tread depth is generally defined as the distance between the tread contact surface and a translation of this contact surface to be tangent to the deepest features in the tread.

The tread 2 has respective tread edge limits 21, 21' on each side and longitudinal ribs 25 defined by longitudinal grooves 20 separating the ribs 25. The tread edge limits 21, 21' are straight lines running in the longitudinal direction X around the tire 1 positioned at the outboard most locations in the lateral direction Y of the rolling tread width (RTW) that engage the ground. However, the tread edge limits 21, 21' do not include the sacrificial rib if the tire 1 does in fact have one or more sacrificial ribs at the tread edges. Longitudinal grooves 20 may be straight or undulate along their main direction as represented in the FIGS. The tread 2 has shoulder areas 22, 22' that extend inboard in the lateral direction Y from their respective tread edge limits 21, 21'. The shoulder areas 22, 22' may in some exemplary embodiments be defined as extending inboard in the lateral direction Y from the tread edge limits 21, 21' each ranging up to 25% of the rolling tread width (RTW). If the tread 2 is designed with shoulder ribs 25, then the shoulder area 22, 22' may be instead the shoulder ribs 25. Various exemplary embodiments will be described in which the shoulder area 22, 22' is in fact the shoulder rib 25, but it is to be understood that certain designs of the tread 2 exist in which shoulder ribs 25 and the associated shoulder grooves 20 are not present in the shoulder areas 22, 22'. The ribs 25 defined between the respective shoulder grooves 26, 26' and tread edge limits 21, 21' are referred to as shoulder ribs 25. The shoulder grooves 26, 26' are the two most outboard longitudinal grooves 20 of the tread 2 in the axial direction Y, and are thus the two longitudinal grooves 20 closest to the two tread edge limits 21, 21'. Shoulder areas 22, 22' are solid ribs comprising lateral sipes 23, 23' running across them and connecting the shoulder grooves 26, 26' to the tread edge limits 21, 21'. Although in other embodiments the lateral sipes 23, 23' need not extend the entire way from the tread edge limits 21, 21' to the shoulder grooves 26, 26' and need not terminate at either one of or both of these features 21, 21' and 26, 26'. A sipe is the narrow space formed in a tread between walls of material over a depth at most equal to the tread depth, said walls being able, at least in part, to come into contact with one another in the usual running conditions of the tire. Sipes are generally made as thin as manufacturing would reasonably allow, most of the time under 1 mm and preferably at around 0.5 mm. In some instances, the sipes 23, 23' are up to 2 mm in thickness. Sipes 23, 23' are full depth sipes. Sipes are said to be full depth sipes when their average depth is at least 50% of the tread depth. In some versions of the tread 2 a mixture of sipes 23, 23' can be present that do not extend to at least 50% of the tread depth, and that do extend to at least 50% of the tread depth.

As shown on the left side of FIG. 2, an interior shoulder zone ISZ of the shoulder area 22 is defined as an area that is from 10% of the rolling tread width (RTW) to 25% of the rolling tread width (RTW) from the tread edge limit 21. The outer boundary line OBL is a longitudinal straight line running at a distance of 8 mm from the tread edge limit 21. Sipe point A is the location of the lateral sipe 23 that intersects the OBL, and sipe point B is the location in the ISZ of the lateral sipe 23 farthest from sipe point A in the longitudinal direction X such lateral distance being designated as maximum distance D.

As an example of measurement, the tread edge limit 21 is a straight edge such that it does not have any variation at the outer surface 27 of the shoulder area 22 in the lateral direction Y. The OBL is thus measured 8mm in the lateral direction Y from the tread edge limit 21 as noted in Fig. 2. The RTW can be measured to be 240 mm, and 25% of this number is 60 mm, and 10% of this number is 24 mm. The ISZ is therefore a zone in the lateral direction Y that is from 24 mm to 60 mm from the tread edge limit 21. As shown, the lateral sipes 23 extend from the tread edge limit 21 in the lateral direction Y past the OBL and to the shoulder groove 26 where they terminate. Since the shoulder groove 26 defines a limit to the inboard extent of the lateral sipe 23, any sipe on the other side of the shoulder groove 26 is not counted as part of the lateral sipe 23 that is between the shoulder groove 26 and the tread edge limit 21. The lateral sipe 23 at the OBL is designated as sipe point A. The maximum distance D of the lateral sipe 23 in the ISZ from sipe point A is noted. This location of the lateral sipe 23 in the ISZ is noted as sipe point B and is located at the shoulder groove 26 in the embodiment shown in FIG. 2. The average sipe angle (αA) can thus be measured for tread 2 with or without shoulder grooves 26, or any grooves 20.

The orientation of a lateral sipe 23 is defined by its angle α relative to the lateral direction Y. A certain angle α can be measured in any location along the sipe 23. This local angle α can be a constant value in the case of a straight sipe 23 but α can also vary significantly along the length of the sipe 23. To characterize the main orientation of the sipe 23, an average sipe angle αa is defined in the shoulder area 22. The average sipe angle αa is defined as the angle relative to the lateral direction Y of a straight line connecting the point (A) where the lateral sipe 23 intersects the OBL, and the point (B) that is where the lateral sipe 23 from 10%-25% in the lateral direction Y is located farthest from the lateral sipe 23 at the OBL (point A) in the longitudinal direction X. According to the invention, this average angle is greater than 20° and preferably less than 70° in absolute value. Using absolute value to characterize an angle is a way to focus on its magnitude and ignore its direction. The average sipe angle αA is shown with reference to FIG. 2. The lateral sipe 23 can be defined as being a sipe that extends at least 10% of the RTW from the tread edge limit 21. This definition of the lateral sipe 23 can distinguish it from mico sipes which are limited in extent in the lateral direction Y and are located just at the tread edge limit 21. The sipe 23 may be two millimeters or less in sipe thickness so as to distinguish it from a groove of the tread 2. The lateral sipe 23' is arranged the similar way with the exception that its extent is again measured from its proximal/associated tread edge limit 21' on the right hand side rather than the left hand side tread edge limit 21.

A distance d can be measured between consecutive sipes. A block aspect ratio BAR can be established as the ratio of the average sipe depth ASD with the average distance d (BAR=ASD/d). The ASD is defined along the thickness Z direction, and is independent of the inclination angle of the sipe 23. In one example, all of the lateral sipes 23 are measured and each one has a sipe depth of 15mm and are all spaced 20mm apart. The average sipe depth ASD is 15mm because all of the sipes 23 have this depth. The average distance d is 20mm because all of the sipes 23 are spaced from consecutives ones at this distance. The block aspect ratio BAR = 15mm / 20mm = 0.75. In another embodiments, there are 60 sipes in the tread 2, and 20 of them have a depth of 8mm, 20 of them have a depth of 12mm, and 20 of them have a depth of 16mm. The average sipe depth ASD = [(20X8mm) + (20X12mm) + (20X16mm)] / 60 = 12mm. 20 of the sipes are 25mm apart from a consecutive sipe, 10 of the sipes are 35mm apart from a consecutive sipe, and 30 of the sipes are measured to be 40mm apart from a consecutive sipe. The average distance d = [(20X25mm) + (10X35mm) + (30X40mm)] / 60 = 34.17mm. The block aspect ratio BAR in this example is BAR= 12mm/34.17mm = 0.35. In some embodiments, the block aspect ratio BAR is at least 0.3. In other embodiments, the block aspect ratio BAR is between 0.5 and 1.5. The distance d can be a perpendicular line drawn from one average sipe line 29 to a consecutive average sipe line 29 of the adjacent sipe 23. All of the distances d of the tread 2 can be obtained and the average can be computed to arrive at the average distance d, if the distances d are not the same for all of the sipes 23 in the tread 2. If the depth of the sipes 23 are not the same, that is if one sipe 23 is constructed so as to have two or more depths, then 5 or more points across the length of the sipe 23 can be measured and averaged to obtain an average depth for that sipe 23. In other arrangements, a weighted average depth can be used instead when the depth of the sipe 23 varies. The block aspect ratio BAR may be just the block aspect ratio BAR of the shoulder area 22, without the measurements of the shoulder area 22'. The shoulder area 22' may be calculated so that it has its own block aspect ratio BAR so that the tread 2 has two BARs if there are sipes 23, 23' present in the shoulder areas 22, 22'.

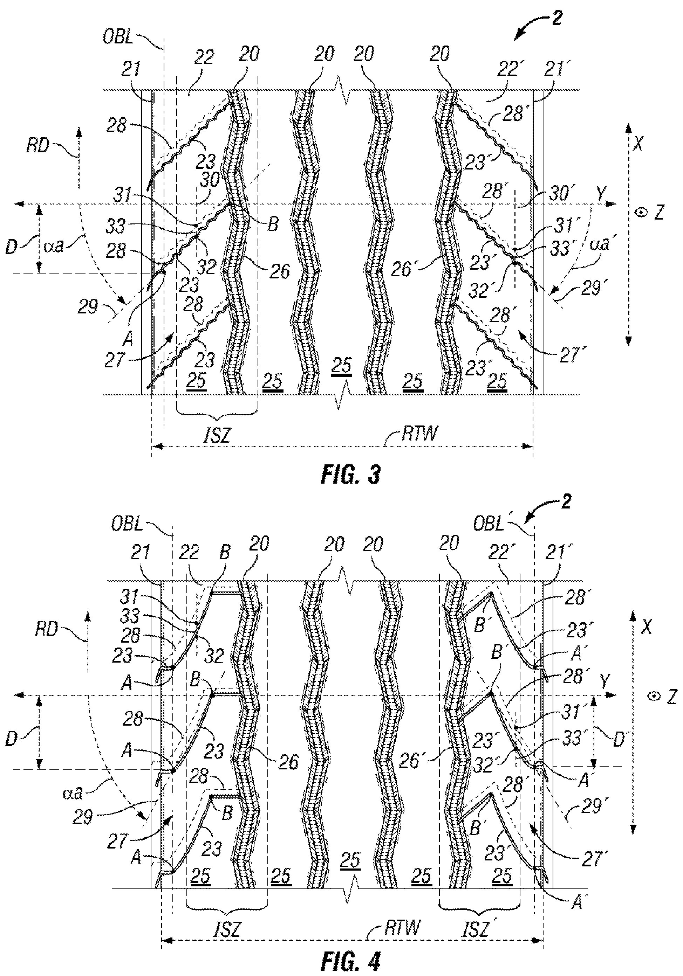

FIG. 3 shows another embodiment where the sipes 23, 23' are undulating along their main direction when viewed on the surface of the tread 2. The undulations can be zig-zagging, a single S-shape, a dog-leg shape, a square U-shaped configuration, an arc, etc. Undulated sipes 23, 23' promote tread stiffness due to the sipe walls interlocking when loaded on the ground. Undulations may have many different shapes and can typically be one-directional or bi-directional, and the shapes (such as the zig-zags) can be along some or all of the entire depth of the sipe 23, 23' in the thickness Z and longitudinal X directions. This FIG also illustrates the fact that the local sipe angle α may vary to a large extent while the average sipe angle αa is maintained between 20° and 70°.

FIG. 4 shows yet another embodiment where the sipes 23, 23' exit to the sides of the shoulder area 22, 22' at a lower angle, typically less than 20°. The lateral sipes 23 on the left hand side of the tread 2 are shaped differently than the lateral sipes 23' on the right hand side of the tread 2. The left hand side lateral sipes 23 extend in the longitudinal direction X in the ISZ and then flatten out so that they no longer extend in the longitudinal direction X in the ISZ until their termination at the shoulder groove 26. Several points of the lateral sipes 23 will be all at the maximum distance D from point A in the longitudinal direction X. However, the selection of point B which is the point that is used to measure the average sipe angle (αA) is selected as the point with maximum distance D that is closest to the tread edge limit 21. As such, if there are multiple points with maximum distance D in the ISZ then the one closest to the tread edge limit 21 in the lateral direction Y is the one used for point B and thus the average sipe angle (αA) calculation. On the right hand side of the tread 2, the lateral sipe 23' extends in the rolling direction in the longitudinal direction X and then backwards against the rolling direction in the longitudinal direction X upon termination at the shoulder groove 26'. The point B' in the ISZ' is that one that is farthest in the D' distance from point A' and it is but a single point.

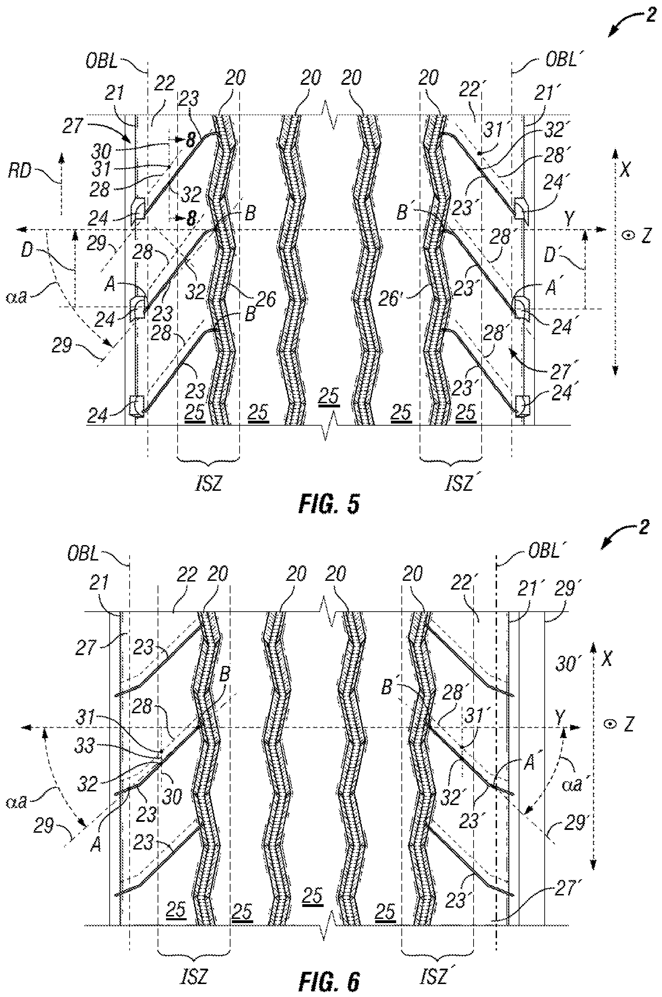

FIG. 5 shows yet another embodiment where the sipes 23, 23' exit to the outside of the shoulder area 22, 22' into notches 24, 24' that are recessed from the tread edge limits 21, 21'. Tread edge notches do not affect the definition of the location of the outer boundary line OBL, OBL'. The notches 24, 24' can be variously shaped. An additional feature that could be present at the ends of the lateral sipes 23, 23' is the trumpet like end shape as disclosed in PCT/US2017/063677 filed on November 29, 2017 entitled, "Tire Sipe Design for Aggression Resistance."

In FIGS. 2, 3 and 5, each side of the tread 2 is represented as being symmetric to the other side of the tread relative to a center (or equatorial) plane of the tread 2. But a tread 2 according to the invention may also comprise tread halves that are notably different, such as for example in FIG. 4. It is also noted that the features on the left side of the tread 2 associated with the shoulder area 22 are denoted without an apostrophe, while the ones on the right hand side of the tread 2 with the shoulder area 22' are denoted with an apostrophe.

FIG. 6 is an alternative exemplary embodiment of another version of the tread 2 in which the lateral sipes 23, 23' are angled in shape in the lateral direction Y such that they may be described as being in the shape of a hockey stick. The tread 2 is a directional tread in accordance with various exemplary embodiments.

The implementation of average sipe angles αa at the high magnitudes disclosed allows for the reduction of stresses at the trailing edge of the block bounded by the lateral sipes 23, 23'. This reduction of stress is due to a gradual reduction of block stiffness as the block exits contact which is a result of the tapered shape of the trailing edge of the block. This reduction of stress reduces the tendency of the block to form heel and toe wear. In addition to having this average sipe angle αa at the magnitudes disclosed, the present tread 2 features lateral sipes 23, 23' that are inclined in a "negative" direction in order to improve the irregular wear performance of the tread 2.

In FIG 8. the negative inclination of the sipe 23, 23' produces an orientation in which the bottom of the sipe 23, 23' enters the contact patch 36 before the top of the sipe 23, 23' at the outer surface 27, 27'. It has been discovered that if this angle is sufficiently high, for example greater than 10 degrees, in a shoulder area 22, 22' that the blocks bounded by the sipes 23, 23' behave more like a continuous rib. The high stresses formed at the leading and trailing edges of the block due to block compression are greatly reduced as if no sipe 23, 23' were present in the shoulder area 22, 22'. During rolling, applicant theorizes that the sipe 23, 23' closes up before it enters the contact patch 36 thus limiting the Poisson effect that develops as the block is compressed in the contact patch 36. Since no Poisson effect can take place due to the gap being closed, no leading-trailing edge stress can be formed. By adding the negative inclination of the sipe 23, 23' to the average sipe angle αa, αa' magnitude feature the benefits of both mechanisms may be obtained to give the shoulder area 22, 22' improved irregular wear performance. However, too much of one, or too much of both, of these will result in a block that is too supple and subject to abnormal wear and/or aggression damage and should be avoided.

The present tread 2 utilizes lateral sipes 23, 23' in the shoulder area 22, 22' that include both the negative inclination of the sipe 23, 23' and the average sipe angle αa, αa' magnitude feature that together create a synergistic effect in reducing abnormal wear. FIG. 7 shows a cross-sectional view at line 7-7 of FIG. 2 in which the negative inclination angle can be shown and described. The lateral sipe 23 is straight in shape and has a constant cross-sectional shape and extends down into the tread 2. The shoulder area 22 has an outer surface 27 into which the lateral sipe 23 extends downward at an angle to the thickness, radial direction Z. A sipe top point 32 is present at the top of the lateral sipe 23 at the outer surface 27. The lateral sipe 23 extends into the tread 2 until it terminates at a sipe bottom 28 which is the location farthest from the opening at the sipe top point 32. A sipe bottom point 31 is noted at a location at the sipe bottom 28. A sipe inclination line 33 extends from the sipe bottom point 31 to the sipe top point 32. The bottom of the sipe 23 features a tear drop, but this feature is optional in other embodiments. The tear drop can be sized so that its average diameter is greater than the width of the sipe 23 that is outside of its tear drop portion. The tear drop can be provided in various cross-sectional shapes, and can have a cross-sectional area that is from 1.5 mm² to 30 mm².

A reference line 34 extends through the sipe bottom point 31 and through the outer surface 27. The reference line 34 is oriented completely in the radial direction Z and does not have a component in the longitudinal/circumferential direction X or the lateral/axial direction Y. The radial direction Z could in some instances be described as the thickness direction Z such as when the tread 2 is not located on a tire. In these instances, the reference line 34 again only extends in the thickness direction Z and not in the longitudinal direction X or the lateral direction Y. The inclination of the lateral sipe 23 is observed upon comparison of the orientation of the sipe inclination line 33 to the reference line 34. The sipe inclination line 33 is oriented at a sipe inclination angle 35 to the reference line 34. The sipe inclination angle 35 may be from 10 degrees to 45 degrees, from 11 degrees to 45 degrees, from 10 degrees to 20 degrees, from 11 degrees to 20 degrees, from 10 degrees to 15 degrees, from 13 degrees to 23 degrees, from 15 degrees to 28 degrees, from 15 degrees to 30 degrees, from 18 degrees to 28 degrees, from 20 degrees to 25 degrees, from 20 degrees to 45 degrees, or from 12 degrees to 23 degrees in accordance with various exemplary embodiments.

The inclination of the sipe inclination line 33 to the reference line 34 is negative in direction in that it is against the rolling direction RD of the tread 2. In this regard, the sipe bottom point 31 is configured to enter the contact patch 36 of the tread 2 as it engages the ground 37 before the sipe top point 32. The reference line 34, the sipe bottom point 31, the sipe inclination line 33, the sipe top point 32, and the sipe inclination angle 35 all fall within a reference plane 30. The cross-section in FIG. 7 likewise falls within the reference plane 30 so all of these elements can be viewed in relation to one another. FIG. 2 shows the orientation of the reference plane 30 relative to the rest of the tread 2. As shown, the reference plane 30 is oriented in the longitudinal/circumferential direction X such that the longitudinal/circumferential direction X, and the rolling direction RD, lies within the reference plane 30. The lateral/axial direction Y is perpendicular to the reference plane 30. The sipe top point 32 within the reference plane 30 is located within the shoulder area 22. In some instances the elements that lie within the reference plane 30 such as the sipe bottom point 31, the sipe top point 32, the sipe inclination line 33, the reference line 34, and the sipe inclination angle 35 are all located in the shoulder area 22.

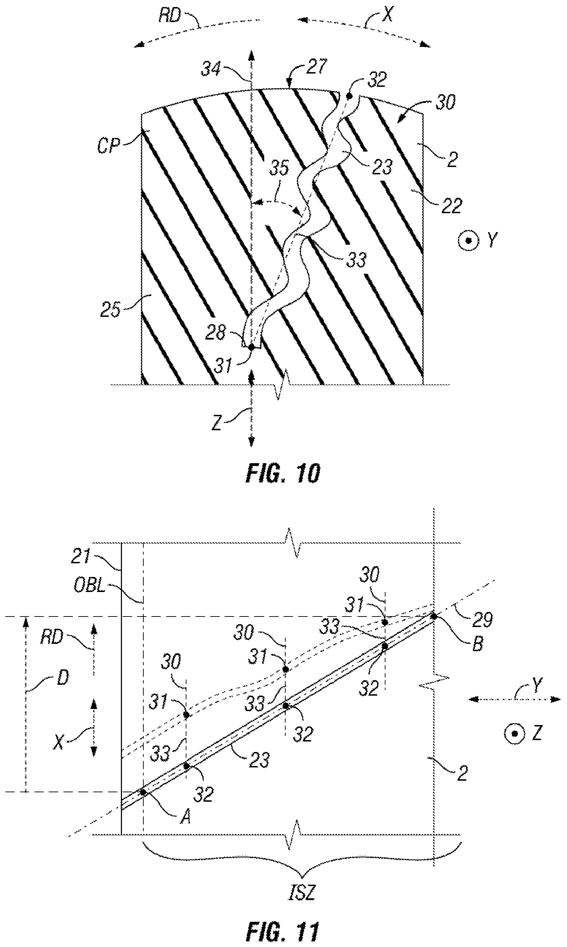

FIG. 10 is a view similar to that of FIG. 7 but with a lateral sipe 23 that instead of having a straight extension from the sipe bottom point 31 to the sipe top point 32 has instead an undulation between these points 31, 32. The sipe inclination line 33 is inclined at the sipe inclination angle 35 relative to the reference line 34. The points 31 and 32, and lines 33 and 34 and angle 35 are defined in the same way as previously discussed. As shown, the sipe inclination line 33 is not present within the lateral sipe 23 at certain locations due to the undulations.

Another cross-sectional view is shown in FIG. 8 which is a cross-section taken along line 8-8 of FIG. 5 but with the addition of the ground 37 into the figure and with the tread 2 being part of a tire. The reference plane 30 is again oriented relative to the rolling direction RD and the longitudinal/circumferential direction X such that they lie within the reference plane 30. The inclination components of the lateral sipe 23 such as the sipe bottom point 31, the sipe top point 32, the sipe inclination line 33, the reference line 34, and the sipe inclination angle 35 are located within the shoulder area 22 and can be arranged as described above and a repeat of this information is not necessary. The tire is rolled in the rolling direction RD so that a portion of the tread 2 has entered the contact patch 36 upon contact with the ground 37. The direction of inclination of the lateral sipe 23 is shown in that the sipe bottom point 31 enters the contact patch 36 first before the sipe top point 32. In this regard, the lateral sipe 23 is said to be oriented at a "negative" sipe angle in that it is oriented away from the direction of travel of the tread 2 upon forward motion. If the truck were to be put into reverse, of course the opposite configuration would result in which the sipe top point 32 would first enter the contact patch 36 followed by the sipe bottom point 31. Upon forward motion of the tread 2, the sipe bottom point 31 will exit the contact patch 36 first before the sipe top point 32.

The negative inclination angle of the lateral sipe 23 need not be present along the entire length of the lateral sipe 23 in the shoulder area 22. However, at least one location between the OBL and the defined point (point B) lying 10%-25% in from the tread edge limit 21 must include the sipe top point 32 such that the reference plane 30 has the sipe top point 32 within it in addition to the various other elements such as the sipe bottom point 31, the sipe inclination line 33, the reference line 34, and the previously mentioned sipe inclination angle 35. Other locations along the average sipe line 29 within the shoulder area 22 can also have the sipe top point 32 that is within the reference plane 30 which in turn includes the various elements mentioned, but not all of the locations along the average sipe line 29 need have a sipe top point 32 with a reference plane 30 and associated components in which the previously discussed sipe inclination angle 35 has the described magnitudes or direction. As such, it is not required that the entire lateral sipe 23 across the entire shoulder area 22 between points A and B have the negative inclination angle of the magnitudes discussed. However, in some embodiments, the entire lateral sipe 23 across the entire area from the OBL to the designated lateral sipe 23 position in the ISZ does in fact have a negative inclination angle having the sipe inclination angle 35 magnitudes mentioned and in the proper negative orientation.

In some instances, the sipe inclination angle 35 is not the same along the entire length between points A and B. FIG. 11 shows a portion of the tread 2 in which the lateral sipe 23 extends into the tread 2 from the outer surface at different angular orientations so that a constant sipe inclination angle 35 is not present across the entire lateral sipe 23 in the shoulder area 22 between points A and B. As shown, on the left hand side of FIG. 11 sipe top and bottom points 32, 31 are noted with counterpart reference plane 30 and sipe inclination line 33. The sipe inclination angle 35 can be calculated at this location as previously discussed. The shoulder area 22 between points A and B has additional points 32, 31 linked with another reference plane 30 and sipe inclination line 33. The sipe inclination angle 35 is different at this location than at the location on the left hand side. Still further, the lateral sipe 23 changes at the right hand side such that the right hand location points 32, 31 with associated plane 30 and sipe line 33 has yet a different sipe inclination angle 35. In instances where the sipe inclination angle 35 is not constant in the shoulder portion 22 between points A and B, the sipe inclination angle 35 of the lateral sipe 23 is determined by obtaining an average of the sipe inclination angle 35 at five equally spaced points along the lateral sipe 23. As an example, the sipe inclination angle 35 can be measured at five different equally spaced locations along its length between points A and B to yield values of 15 degrees, 15 degrees, 20 degrees, 20 degrees, and 20 degrees for sipe inclination angle 35 of 18 degrees ((15+15+20+20+20) / 5 = 18).

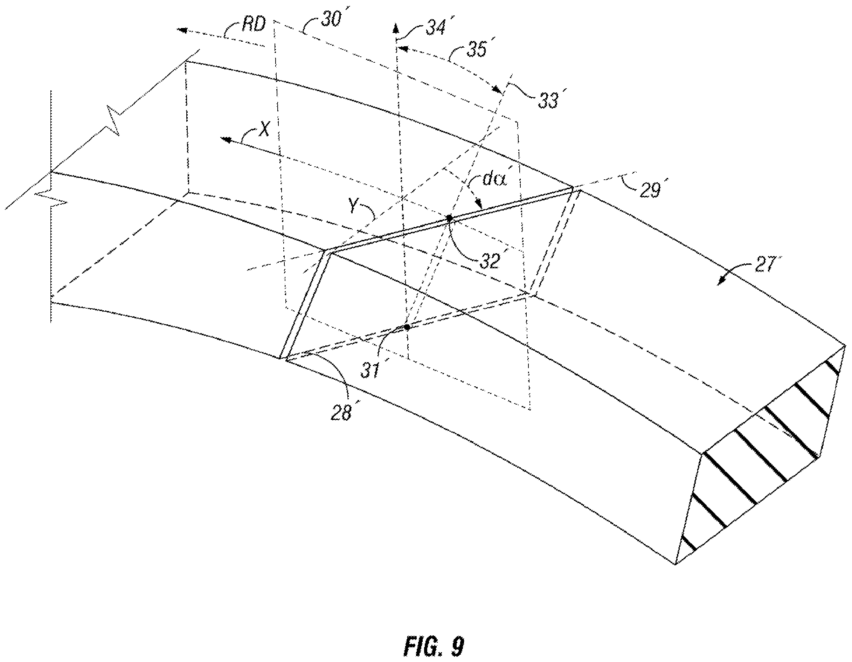

Any number of the lateral sipes 23 as described can be present in the tread 2. In some instances, all of the lateral sipes 23 of the shoulder area 22 are as described. In other embodiments, only one of the lateral sipes 23 in the shoulder area 22 is as described. Additionally or alternatively, the lateral sipes 23 need not only be in the shoulder area 22 on the left hand side of the FIGs, but could additionally or alternatively be located on the shoulder area 22' located on the right hand side of the FIGs. A portion of a shoulder area 22' located on the right hand side of the tread 2 is shown in FIG. 9 in perspective view. The outer surface 27' has a lateral sipe 23' with an average sipe angle αa' as previously discussed. Further, the lateral sipe 23' is inclined in the negative direction to the magnitude extents as previously mentioned. A sipe bottom point 31' is at the sipe bottom 28' in the same plane as the reference plane 30' which is the same plane the rolling direction RD and the longitudinal/circumferential direction X are located. A sipe inclination line 33' runs from the sipe bottom point 31' to the sipe top point 32' and lies within the reference plane 30', as does a reference line 34' that extends through the sipe bottom point 31' and has a component of extension only in the thickness direction / radial direction Z. The sipe inclination angle 35' denotes the orientation of the sipe inclination line 33' relative to the reference line 34'. The sipe inclination angle 35' may be the same magnitudes as that previously discussed with respect to the sipe inclination angle 35 above. Also, the lateral sipe 23' is inclined in the negative direction with respect to the rolling direction RD as previously mentioned. Any number of the lateral sipes 23' on the right hand side of the tread 2 in the shoulder area 22' can be configured in this manner such as one, two, or all of them.

The measurements may be taken at the outer surfaces 27, 27' of a new tire 1, unless expressly noted, such as those pertaining to the depth of the sipes 23, 23', the sipe bottom points 31, 31', the reference planes 30, 30' and other positions of the tread 2. In some instances, the measurements can be taken after the tread 2 has undergone some amount of wear.

The tread 2 may also have shallow depressions, markings or engravings in otherwise solid shoulder areas 22, 22'. Such shallow features and are intended to wear out during the early wear life of the tread and do not affect the stiffness of the ribs 22, 22'. The lateral sipes 23, 23' can have various features such as tear drops, edges with radii, and zig-zag shapes. Also, it is to be understood that as used herein that ranges, such as for example "from 10 to 50", or "between 10 and 50", include the values between the two numbers and also include the numbers themselves.

## Claims

1. A heavy truck tire tread (2) having a longitudinal direction (X), a lateral direction (Y) and a thickness direction (Z), said tread comprising:
- a tread edge limit (21);
- a shoulder area (22) extending in the lateral direction (Y) from the tread edge limit (21);
wherein the shoulder area (22) has an outer surface (27) and a lateral sipe (23) with an average sipe line (29) at the outer surface (27) oriented at an average sipe angle (αa) between a point A where the lateral sipe (23) intersects an outer boundary line (OBL) and a point B that is where the lateral sipe (23) is farthest from point A in the longitudinal direction (X) from 10% to 25% of a rolling tread width (RTW) from the tread edge limit (21) in the lateral direction (Y), wherein the outer boundary line (OBL)is a longitudinal straight line running at a distance of 8 mm from the tread edge limit,
**characterised in that**
the average sipe angle (αa) is greater than 20° in absolute value, wherein the average sipe angle (αa) is oriented at an angle relative to the lateral direction (Y) running inboard to outboard in the lateral direction (Y), wherein the lateral sipe (23) extends from the tread edge limit (21) in the lateral direction (Y) past the outer boundary line (OBL) and to the shoulder groove (26) where the lateral sipe (21) terminates;
the lateral sipe (23) has a sipe bottom (28), wherein the longitudinal direction (X) lies in a reference plane (30), wherein a sipe bottom point (31) is located in the reference plane (30) at the sipe bottom (28), wherein a sipe top point (32) is located in the reference plane (30) at the average sipe line (29), wherein a sipe inclination line (33) extends from the sipe bottom point (31) to the sipe top point (32), wherein a reference line (34) extends in the thickness direction (Z) through the sipe bottom point (31) wherein the reference line (34) does not have a component in the longitudinal direction (X) or the lateral direction (Y), wherein the sipe inclination line (33) is at a sipe inclination angle (35) to the reference line (34), wherein the sipe inclination angle (35) is from 10 to 50 degrees, wherein the sipe bottom point (31) is configured to approach a contact patch (36) before the sipe top point (32) upon forward motion.

2. The heavy truck tire tread (2) according to Claim 1, wherein the tread (2) has a second tread edge limit (21') spaced from the tread edge limit (21) in the lateral direction (Y), wherein a second shoulder area (22') extending in the lateral direction (Y) from the second tread edge limit (21');
wherein the second shoulder area (22') has a second outer surface (27') and a second lateral sipe (23') with a second average sipe line (29') at the second outer surface (27') oriented at a second average sipe angle (αa') between a point A' where the second lateral sipe (23') intersects a second outer boundary line (OBL') and a point B' that is where the second lateral sipe (23') is farthest from the point B' in the longitudinal direction (X) from 10% to 25% of the rolling tread width (RTW) from the second tread edge limit (21') in the lateral direction (Y), wherein the second average sipe angle (αa') is greater than 20 degrees in absolute value, wherein the second average sipe angle (αa') is oriented at an angle relative to the lateral direction (Y) running inboard to outboard in the lateral direction (Y);
wherein the second lateral sipe (23') has a second sipe bottom (28'), wherein the longitudinal direction (X) lies in a second reference plane (30'), wherein a second sipe bottom point (31') is located in the second reference plane (30') at the second sipe bottom (28'), wherein a second sipe top point (32') is located in the second reference plane (30') at the second average sipe line (29'), wherein a second sipe inclination line (33') extends from the second sipe bottom point (31') to the second sipe top point (32'), wherein a second reference line (34') extends in the thickness direction (Z) through the second sipe bottom point (31') wherein the second reference line (34') does not have a component in the longitudinal direction (X) or the lateral direction (Y), wherein the second sipe inclination line (33') is at a second sipe inclination angle (35') to the second reference line (34'), wherein the second sipe inclination angle (35') is from 10 to 50 degrees, wherein the sipe bottom point (31') is configured to approach the contact patch (36) before the sipe top point (32') upon forward motion.

3. The heavy truck tire tread (2) according to claim 1 or 2, wherein the average sipe angle (αa, αa') is less than 70 degrees in absolute value, wherein the sipe inclination angle (35, 35') is from 10 to 40 degrees.

4. The heavy truck tire tread (2) according to any one of claims 1-3, wherein the average sipe angle (αa, αa') is greater than 35 degrees and less than 55 degrees in absolute value, wherein the sipe inclination angle (35, 35') is greater than 15 degrees and less than 25 degrees.

5. The heavy truck tire tread (2) according to any one of the preceding claims, wherein the lateral sipe (23, 23') is oriented at a sipe angle (α, α') to the lateral direction (Y) that is less than 20 degrees in absolute value at a point where the lateral sipe (23, 23') exits the shoulder area (22, 22') towards the tread edge limit (21, 21').

6. The heavy truck tire tread (2) according to any one of the preceding claims, wherein a block aspect ratio (BAR) of the average sipe depth (ASD) with the average distance between consecutive sipes (d) is at least 0.3.

7. The heavy truck tire tread (2) according to claim 6, wherein the block aspect ratio (BAR) of the average sipe depth (ASD) with the average distance between consecutive sipes (d) is between 0.5 and 1.5.

8. The heavy truck tire tread (2) according to any one of the preceding claims, wherein the lateral sipe (23, 23') exits into a shoulder notch (24, 24') of the shoulder area (22, 22') towards the tread edge limit (21, 21').

9. The heavy truck tire tread (2) according to any one of the preceding claims, wherein the lateral sipe (23, 23') is oriented relative to a rolling direction (RD) such that Point B is configured to make contact with the ground before Point A.

10. The heavy truck tire tread (2) according to any one of claims 1-9, wherein the reference plane (30, 30') is located half way between Point A and Point B in the lateral direction (Y).

11. The heavy truck tire tread (2) according to any one of claims 1-10, wherein the entire lateral sipe (23, 23') is inclined between 10 to 50 degrees such that the bottom of the lateral sipe (23, 23') is configured to approach the contact patch (36) before the top of the lateral sipe (23, 23') at the outer surface (27, 27') at each location of the lateral sipe (23, 23') in the lateral direction (Y) from point A, A' to point B, B'.

12. The heavy truck tire tread (2) according to any one of the preceding claims, wherein the tread (2) is new with no tread wear.

13. The heavy truck tire tread (2) according to any one of claims 1-11, wherein the tread (2) has been worn down 50% from its initial new state.

14. The heavy truck tire tread (2) according to any one of claims 1-13, further comprising longitudinal grooves (20) separating longitudinal ribs (25), wherein one of the longitudinal grooves (20) is a shoulder groove (26), wherein one of the longitudinal ribs (25) is a shoulder rib (25) that is the shoulder area (22), wherein the shoulder area (22) is defined between the tread edge limit (21) and the shoulder groove (26).

15. The heavy truck tire tread (2) according to claim 1, wherein the sipe inclination angle (35) has a different magnitude at different lateral (Y) locations of the lateral sipe (23).

16. The heavy truck tire tread (2) according to any one of the preceding Claims wherein the lateral sipe (23) has an undulating shape from the sipe bottom (28) to a top of the lateral sipe (23).

17. A heavy truck tire (1) comprising a tread (2) according to any of the preceding Claims.

## Patentansprüche

1. LKW-Reifenprofil (2), das eine Längsrichtung (X), eine Seitenrichtung (Y) und eine Dickenrichtung (Z) aufweist, wobei das Profil umfasst:
- eine Profilrandbegrenzung (21);
- einen Schulterbereich (22), der sich in der Seitenrichtung (Y) von der Profilrandbegrenzung (21) aus erstreckt;
wobei der Schulterbereich (22) eine Außenfläche (27) und eine seitliche Lamelle (23) mit einer mittleren Lamellenlinie (29) an der Außenfläche (27) aufweist, die bei einem mittleren Lamellenwinkel (αa) zwischen einem Punkt A, wo die seitliche Lamelle (23) eine äußere Grenzlinie (OBL) schneidet, und einem Punkt B, der sich dort befindet, wo die seitliche Lamelle (23) am weitesten von Punkt A in der Längsrichtung (X) entfernt ist, von 10% bis 25% einer Rollprofilbreite (RTW) von der Profilrandbegrenzung (21) in der Seitenrichtung (Y) ausgerichtet ist, wobei die äußere Begrenzungslinie (OBL) eine Längsgerade ist, die in einem Abstand von 8 mm von dem der Profilrandbegrenzung verläuft,
**dadurch gekennzeichnet, dass**
der mittlere Lamellenwinkel (αa) im absoluten Wert größer als 20° ist, wobei der durchschnittliche Lamellenwinkel (αa) relativ zu der Seitenrichtung (Y), von innen nach außen in der Seitenrichtung (Y) verlaufend, angewinkelt ausgerichtet ist, wobei sich die seitliche Lamelle (23) von der Profilrandbegrenzung (21) in der Seitenrichtung (Y) über die äußere Grenzlinie (OBL) und zu der Schulternut (26) erstreckt, wo die seitliche Lamelle (21) endet;
die Seitenlamelle (23) einen Lamellenboden (28) aufweist, wobei die Längsrichtung (X) in einer Bezugsebene (30) liegt, wobei sich in der Bezugsebene (30) ein Lamellenbodenpunkt (31) am Lamellenboden (28) befindet, wobei sich ein Lamellenspitzenpunkt (32) in der Bezugsebene (30) an der mittleren Lamellenlinie (29) befindet, wobei sich eine Lamellenneigungslinie (33) von dem Lamellenbodenpunkt (31) bis zu dem Lamellenoberpunkt (32) erstreckt, wobei sich eine Bezugslinie (34) in der Dickenrichtung (Z) durch den Lamellenbodenpunkt (31) erstreckt, wobei die Bezugslinie (34) in der Längsrichtung (X) oder in der Seitenrichtung (Y) keine Komponente aufweist, wobei die Lamellenneigungslinie (33) bei einem Lamellenneigungswinkel (35) zu der Bezugslinie (34) liegt, wobei der Lamellenneigungswinkel (35) 10 bis 50 Grad ist, wobei der Lamellenbodenpunkt (31) so konfiguriert ist, dass er sich bei Vorwärtsbewegung einem Aufstandspunkt (36) vor dem Lamellenspitzenpunkt (32) nähert.

2. LKW-Reifenprofil (2) nach Anspruch 1, wobei das Profil (2) eine zweite Profilrandbegrenzung (21') aufweist, die in der Seitenrichtung (Y) einen Abstand von der Profilrandbegrenzung (21) aufweist, wobei sich ein zweiter Schulterbereich (22') in der Längsrichtung (Y) von der zweiten Profilrandbegrenzung (21') aus erstreckt;
wobei der zweite Schulterbereich (22') eine zweite Außenfläche (27') und eine zweite Seitenlamelle (23') mit einer zweiten mittleren Lamellenlinie (29') an der zweiten Außenfläche (27') aufweist, die in einem zweiten mittleren Lamellenwinkel (αa') zwischen einem Punkt A', wo die zweite Seitenlamelle (23') eine zweite äußere Grenzlinie (OBL') schneidet, und einem Punkt B', der dort liegt, wo die zweite seitliche Lamelle (23') am weitesten in der Längsrichtung (X) vom Punkt B' entfernt ist, von 10 % bis 25 % der Rollprofilbreite (RTW) von der zweiten seitlichen Profilkante (21') in Querrichtung (Y) ausgerichtet ist, wobei der zweite mittlere Lamellenwinkel (αa') im absoluten Wert größer als 20 Grad ist, wobei der zweite mittlere Lamellenwinkel (αa') relativ zu der Seitenrichtung (Y), von innen nach außen in der Seitenrichtung (Y) verlaufend, angewinkelt ausgerichtet ist;
wobei die zweite Seitenlamelle (23') einen zweiten Lamellenboden (28') aufweist, wobei die Längsrichtung (X) in einer zweiten Bezugsebene (30') liegt, wobei sich ein zweiter Lamellenbodenpunkt (31') in der zweiten Bezugsebene (30') am zweiten Lamellenboden (28') befindet, wobei sich in der zweiten Bezugsebene (30') an der zweiten mittleren Lamellenlinie (29') ein zweiter Lamellenspitzenpunkt (32') befindet, wobei sich eine zweite Lamellenneigungslinie (33') von dem zweiten Lamellenendpunkt (31') bis zu dem zweiten Lamellenspitzenpunkt (32') erstreckt, wobei sich eine zweite Bezugslinie (34') in der Dickenrichtung (Z) durch den zweiten Lamellenbodenpunkt (31') erstreckt, wobei die zweite Bezugslinie (34') keine Komponente in der Längsrichtung (X) oder der Seitenrichtung (Y) aufweist, wobei die zweite Lamellenneigungslinie (33') in einem zweiten Lamellenneigungswinkel (35') zu der zweiten Bezugslinie (34') liegt; wobei der zweite Lamellenneigungswinkel (35') 10 bis 50 Grad ist, wobei der Lamellenbodenpunkt (31') so konfiguriert ist, dass er sich bei Vorwärtsbewegung dem Aufstandspunkt (36) vor dem Lamellenspitzenpunkt (32') nähert.

3. LKW-Reifenprofil (2) nach Anspruch 1 oder 2, wobei der mittlere Lamellenwinkel (αa, αa' ) weniger als 70 Grad im absoluten Wert ist, wobei der Lamellenneigungswinkel (35, 35') 10 bis 40 Grad ist.

4. LKW-Reifenprofil (2) nach einem der Ansprüche 1-3, wobei der mittlere Lamellenwinkel (αa, αa') größer als 35 Grad und kleiner als 55 Grad im absoluten Wert ist, wobei der Lamellenneigungswinkel (35, 35') größer als 15 Grad und kleiner als 25 Grad ist.

5. LKW-Reifenprofil (2) nach einem der vorstehenden Ansprüche, wobei die seitliche Lamelle (23, 23') in einem Lamellenwinkel (α, α') zu der Seitenrichtung (Y) ausgerichtet ist, der weniger als 20 Grad im absoluten Wert an einer Stelle ist, wo die seitliche Lamelle (23, 23') aus dem Schulterbereich (22, 22') in Richtung der Profilrandbegrenzung (21, 21') hinausgeht.

6. LKW-Reifenprofil (2) nach einem der vorstehenden Ansprüche, wobei ein Blockaspektverhältnis (BAR) der mittleren Lamellentiefe (ASD) mit dem mittleren Abstand zwischen aufeinanderfolgenden Lamellen (d) mindestens 0,3 beträgt.

7. LKW-Reifenprofil (2) nach Anspruch 6, wobei das Blockaspektverhältnis (BAR) der mittleren Lamellentiefe (ASD) mit dem mittleren Abstand zwischen den aufeinanderfolgenden Lamellen (d) zwischen 0,5 und 1,5 beträgt.

8. LKW-Reifenprofil (2) nach einem der vorstehenden Ansprüche, wobei die seitliche Lamelle (23, 23') in eine Schulterkerbe (24, 24') des Schulterbereichs (22, 22') in Richtung der Profilrandbegrenzung (21, 21') hinausgeht.

9. LKW-Reifenprofil (2) nach einem der vorstehenden Ansprüche, wobei die seitliche Lamelle (23, 23') relativ zu einer Abrollrichtung (RD) so ausgerichtet ist, dass Punkt B konfiguriert ist, vor Punkt A mit dem Boden in Berührung zu kommen.

10. LKW-Reifenprofil (2) nach einem der Ansprüche 1-9, wobei sich die Bezugsebene (30, 30') auf halber Strecke zwischen Punkt A und Punkt B in der Seitenrichtung (Y) befindet.

11. LKW-Reifenprofil (2) nach einem der Ansprüche 1-10, wobei die gesamte seitliche Lamelle (23, 23') zwischen 10 und 50 Grad geneigt ist, sodass der Boden der Seitenlamelle (23, 23') konfiguriert ist, sich dem Aufstandspunkt (36) vor der Oberseite der seitlichen Lamelle (23, 23') an der Außenfläche (27, 27') an jeder Stelle der seitlichen Lamelle (23, 23') in der Seitenrichtung (Y) von Punkt A, A' zu Punkt B, B' zu nähern.

12. LKW-Reifenprofil (2) nach einem der vorstehenden Ansprüche, wobei das Profil (2) neu ohne jeglichen Profilverschleiß ist.

13. LKW-Reifenprofil (2) nach einem der Ansprüche 1-11, wobei das Profil (2) von seinem ursprünglichen Neuzustand zu 50 % abgenutzt worden ist.

14. LKW-Reifenprofil (2) nach einem der Ansprüche 1-13, das weiter Längsnuten (20) umfasst, die Längsrippen (25) trennen, wobei eine der Längsnuten (20) eine Schulternut (26) ist, wobei eine der Längsrippen (25) eine Schulterrippe (25) ist, die der Schulterbereich (22) ist, wobei der Schulterbereich (22) zwischen der Profilrandbegrenzung (21) und der Schulternut (26) definiert ist.

15. LKW-Reifenprofil (2) nach Anspruch 1, wobei der Lamellenneigungswinkel (35) an unterschiedlichen seitlichen (Y) Positionen der seitlichen Lamellen (23) eine unterschiedliche Größe aufweist.

16. LKW-Reifenprofil (2) nach einem der vorstehenden Ansprüche, wobei die seitliche Lamelle (23) von dem Lamellenboden (28) bis zu einer Oberseite der seitlichen Lamelle (23) eine Wellenform aufweist.

17. LKW-Reifen (1), der ein Profil (2) nach einem der vorstehenden Ansprüche umfasst.

## Revendications

1. Bande de roulement de pneu de poids lourd (2) présentant une direction longitudinale (X), une direction latérale (Y) et une direction d'épaisseur (Z), ladite bande de roulement comprenant :
- une limite de bord de bande de roulement (21) ;
- une zone d'épaulement (22) s'étendant dans la direction latérale (Y) à partir de la limite de bord de bande de roulement (21) ;
dans laquelle la zone d'épaulement (22) présente une surface externe (27) et une lamelle latérale (23) avec une ligne de lamelle moyenne (29) au niveau de la surface externe (27) orientée selon un angle de lamelle moyen (αa) entre un point A où la lamelle latérale (23) croise une ligne de frontière externe (OBL) et un point B qui est le point où la lamelle latérale (23) est la plus éloignée du point A dans la direction longitudinale (X) de 10 % à 25 % d'une largeur de bande de roulement roulante (RTW) à partir de la limite de bord de bande de roulement (21) dans la direction latérale (Y), dans laquelle la ligne de frontière externe (OBL) est une ligne droite longitudinale passant à une distance de 8 mm à partir de la limite de bord de bande de roulement,
**caractérisée en ce que** l'angle de lamelle moyen (αa) est supérieur à 20° en valeur absolue, dans laquelle l'angle de lamelle moyen (αa) est orienté selon un angle par rapport à la direction latérale (Y) passant de l'intérieur vers l'extérieur dans la direction latérale (Y), dans laquelle la lamelle latérale (23) s'étend à partir de la limite de bord de bande de roulement (21) dans la direction latérale (Y) au-delà de la ligne de frontière externe (OBL) et vers la rainure d'épaulement (26) où la lamelle latérale (21) se termine ;
la lamelle latérale (23) présente une partie inférieure de lamelle (28), dans laquelle la direction longitudinale (X) repose dans un plan de référence (30), dans laquelle un point inférieur de lamelle (31) est situé dans le plan de référence (30) au niveau de la partie inférieure de lamelle (28), dans laquelle un point supérieur de lamelle (32) est situé dans le plan de référence (30) au niveau de la ligne de lamelle moyenne (29), dans laquelle une ligne d'inclinaison de lamelle (33) s'étend du point inférieur de lamelle (31) au point supérieur de lamelle (32), dans laquelle une ligne de référence (34) s'étend dans la direction d'épaisseur (Z) à travers le point inférieur de lamelle (31) dans laquelle la ligne de référence (34) ne présente pas de composant dans la direction longitudinale (X) ou la direction latérale (Y), dans laquelle la ligne d'inclinaison de lamelle (33) forme un angle d'inclinaison de lamelle (35) par rapport à la ligne de référence (34), dans laquelle l'angle d'inclinaison de lamelle (35) est de 10 à 50 degrés, dans laquelle le point inférieur de lamelle (31) est configuré pour s'approcher d'une plage de contact (36) avant le point supérieur de lamelle (32) lors du mouvement vers l'avant.

2. Bande de roulement de pneu de poids lourd (2) selon la revendication 1, dans laquelle la bande de roulement (2) présente une seconde limite de bord de bande de roulement (21') espacée de la limite de bord de bande de roulement (21) dans la direction latérale (Y), dans laquelle une seconde zone d'épaulement (22') s'étend dans la direction latérale (Y) à partir de la seconde limite de bord de bande de roulement (21') ;
dans laquelle la seconde zone d'épaulement (22') présente une seconde surface externe (27') et une seconde lamelle latérale (23') avec une seconde ligne de lamelle moyenne (29') au niveau de la seconde surface externe (27') orientée selon un second angle de lamelle moyen (αa' ) entre un point A' où la seconde lamelle latérale (23') croise une seconde ligne de frontière externe (OBL' ) et un point B' qui est le point où la seconde lamelle latérale (23') est la plus éloignée du point B' dans la direction longitudinale (X) de 10 % à 25 % de la largeur de bande de roulement roulante (RTW) à partir de la seconde limite de bord de bande de roulement (21') dans la direction latérale (Y), dans laquelle le second angle de lamelle moyen (αa') est supérieur à 20 degrés en valeur absolue, dans laquelle le second angle de lamelle moyen (αa' ) est orienté selon un angle par rapport à la direction latérale (Y) passant de l'intérieur vers l'extérieur dans la direction latérale (Y) ;
dans laquelle la seconde lamelle latérale (23') présente une seconde partie inférieure de lamelle (28'), dans laquelle la direction longitudinale (X) repose dans un second plan de référence (30'), dans laquelle un second point inférieur de lamelle (31') est situé dans le second plan de référence (30') au niveau de la seconde partie inférieure de lamelle (28'), dans laquelle un second point supérieur de lamelle (32') est situé dans le second plan de référence (30') au niveau de la seconde ligne de lamelle moyenne (29'), dans laquelle une seconde ligne d'inclinaison de lamelle (33') s'étend du second point inférieur de lamelle (31') au second point supérieur de lamelle (32'), dans laquelle une seconde ligne de référence (34') s'étend dans la direction d'épaisseur (Z) à travers le second point inférieur de lamelle (31') dans laquelle la seconde ligne de référence (34') ne présente pas de composant dans la direction longitudinale (X) ou la direction latérale (Y), dans laquelle la seconde ligne d'inclinaison de lamelle (33') forme un second angle d'inclinaison de lamelle (35') par rapport à la seconde ligne de référence (34'), dans laquelle le second angle d'inclinaison de lamelle (35') est de 10 à 50 degrés, dans laquelle le point inférieur de lamelle (31') est configuré pour s'approcher de la plage de contact (36) avant le point supérieur de lamelle (32') lors du mouvement vers l'avant.

3. Bande de roulement de pneu de poids lourd (2) selon la revendication 1 ou 2, dans laquelle l'angle de lamelle moyen (αa, αa') est inférieur à 70 degrés en valeur absolue, dans laquelle l'angle d'inclinaison de lamelle (35, 35') est de 10 à 40 degrés.

4. Bande de roulement de pneu de poids lourd (2) selon l'une quelconque des revendications 1-3, dans laquelle l'angle de lamelle moyen (αa, αa') est supérieur à 35 degrés et inférieur à 55 degrés en valeur absolue, dans laquelle l'angle de lamelle moyen (35, 35') est supérieur à 15 degrés et inférieur à 25 degrés.

5. Bande de roulement de pneu de poids lourd (2) selon l'une quelconque des revendications précédentes, dans laquelle la lamelle latérale (23, 23') est orientée selon un angle de lamelle (α, α') par rapport à la direction latérale (Y) qui est inférieur à 20 degrés en valeur absolue au niveau d'un point où la lamelle latérale (23, 23') sort de la zone d'épaulement (22, 22') en direction de la limite de bord de bande de roulement (21, 21').

6. Bande de roulement de pneu de poids lourd (2) selon l'une quelconque des revendications précédentes, dans laquelle un rapport d'aspect de bloc (BAR) entre la profondeur de lamelle moyenne (ASD) et la distance moyenne entre des lamelles consécutives (d) est d'au moins 0,3.

7. Bande de roulement de pneu de poids lourd (2) selon la revendication 6, dans laquelle le rapport d'aspect de bloc (BAR) entre la profondeur de lamelle moyenne (ASD) et la distance moyenne entre des lamelles consécutives (d) est entre 0,5 et 1,5.

8. Bande de roulement de pneu de poids lourd (2) selon l'une quelconque des revendications précédentes, dans laquelle la lamelle latérale (23, 23') sort dans une encoche d'épaulement (24, 24') de la zone d'épaulement (22, 22') en direction de la limite de bord de bande de roulement (21, 21').

9. Bande de roulement de pneu de poids lourd (2) selon l'une quelconque des revendications précédentes, dans laquelle la lamelle latérale (23, 23') est orientée par rapport à une direction de roulement (RD) de sorte que le Point B soit configuré pour entrer en contact avec le sol avant le Point A.

10. Bande de roulement de pneu de poids lourd (2) selon l'une quelconque des revendications 1-9, dans laquelle le plan de référence (30, 30') est situé à mi-chemin entre le Point A et le Point B dans la direction latérale (Y).

11. Bande de roulement de pneu de poids lourd (2) selon l'une quelconque des revendications 1-10, dans laquelle toute la lamelle latérale (23, 23') est inclinée entre 10 et 50 degrés de sorte que la partie inférieure de la lamelle latérale (23, 23') soit configurée pour s'approcher de la plage de contact (36) avant la partie supérieure de la lamelle latérale (23, 23') au niveau de la surface externe (27, 27') au niveau de chaque emplacement de la lamelle latérale (23, 23') dans la direction latérale (Y) du Point A, A' au B, B'.

12. Bande de roulement de pneu de poids lourd (2) selon l'une quelconque des revendications précédentes, dans laquelle la bande de roulement (2) est neuve et ne présente aucune usure de bande de roulement.

13. Bande de roulement de pneu de poids lourd (2) selon l'une quelconque des revendications 1-11, dans laquelle la bande de roulement (2) a été usée jusqu'à 50 % par rapport à son état neuf initial.

14. Bande de roulement de pneu de poids lourd (2) selon l'une quelconque des revendications 1-13, comprenant en outre des rainures longitudinales (20) séparant des nervures longitudinales (25), dans laquelle l'une des nervures longitudinales (20) est une rainure d'épaulement (26), dans laquelle l'une des nervures longitudinales (25) est une nervure d'épaulement (25) qui est la zone d'épaulement (22), dans laquelle la zone d'épaulement (22) est définie entre la limite de bord de bande de roulement (21) et la rainure d'épaulement (26).

15. Bande de roulement de pneu de poids lourd (2) selon la revendication 1, dans laquelle l'angle d'inclinaison de lamelle (35) présente une amplitude différente au niveau de différents emplacements latéraux (Y) de la lamelle latérale (23).

16. Bande de roulement de pneu de poids lourd (2) selon l'une quelconque des revendications précédentes dans laquelle la lamelle latérale (23) présente une forme ondulante de la partie inférieure de lamelle (28) à une partie supérieure de la lamelle latérale (23).

17. Pneu de poids lourd (1) comprenant une bande de roulement (2) selon l'une quelconque des revendications précédentes.
